# EUROPÄISCHE PATENTSCHRIFT

(11) **EP 2 531 991 B1**
(45) Veröffentlichungstag und Bekanntmachung des Hinweises auf die Patenterteilung: **28.09.2016**
(21) Anmeldenummer: 11702033.9
(22) Anmeldetag: 02.02.2011
(51) Int. Cl.: G09F 13/16, G09F 13/18, G09F 21/10, B64D 11/00, G02B 6/00, F21V 8/00, G09F 21/04, B64D 45/00, G09F 13/22

(54) **FLACHBAUENDE LEUCHTANZEIGEANORDNUNG SOWIE LICHTEMITTIERMITTEL HIERFÜR**
FLAT ILLUMINATED SIGN AND CORRESPONDING LIGHT EMITTING MEANS
ENSEIGNE LUMINEUSE PLATE ET MOYENS CORRESPONDANTS D'ÉMISSION DE LUMIÈRE

(30) Priorität: 04.02.2010 US 301378 P; 04.02.2010 DE 102010006915
(43) Veröffentlichungstag der Anmeldung: 12.12.2012
(73) Patentinhaber: Airbus Operations GmbH, 21129 Hamburg (DE)
(72) Erfinder: METZECH, Sabine, 27751 Delmenhorst (DE); HESSE, Karsten, 28209 Bremen (DE); LIBRIZZI, Angelo, 58507 Lüdenscheid (DE); GÜNTHER, Jörg, 58513 Lüdenscheid (DE)
(74) Vertreter: Kopf Westenberger Wachenhausen Patentanwälte PartG mbB
(86) Internationale Anmeldenummer: PCT/EP2011/051447
(87) Internationale Veröffentlichungsnummer: WO 2011/095504

(56) Entgegenhaltungen:
- WO-A2-2005/001892
- DE-A1- 10 311 335
- JP-A- 10 247 412
- US-A- 3 752 974
- US-A1- 2004 130 912

## Beschreibung

### GEBIET DER ERFINDUNG

Die Erfindung betrifft eine flachbauende Leuchtanzeigeanordnung mit Lichtemittiermitteln zur Beleuchtung einer Folie für die Anzeige eines auf einer Anzeigefläche aufgebrachten Motivs. Des Weiteren betrifft die Erfindung auch ein speziell ausgebildetes Lichtemittiermittel im Rahmen dieser Leuchtanzeigeanordnung. Ferner betrifft die Erfindung ein Verkehrsflugzeug, welches im Bereich der Passagierkabine mit der flachbauenden Leuchtanzeigeanordnung ausgestattet ist.

Das Einsatzgebiet der erfindungsgegenständlichen Leuchtanzeigeanordnung ist jedoch nicht beschränkt auf den Flugzeugbau. Es ist darüber hinaus auch denkbar, im Fahrzeugbereich, Haustechnikbereich und dergleichen derartige Leuchtanzeigeanordnungen zum Einsatz zu bringen, um beispielsweise hinterleuchtete Schilder, hinterleuchtete Bilder in Wänden oder Werbeanzeigen zu schaffen. Es können auch Symbol- und Funktionsbeleuchtungen für Schalter und dergleichen Bedieneinrichtungen umgesetzt werden. Die Leuchtanzeigeanordnung der hier interessierenden Art kann insbesondere auch für großflächig hinterleuchtete Anzeigeflächen zum Einsatz kommen.

### HINTERGRUND DER ERFINDUNG

Aus der DE 297 11 377 U1 geht eine Leuchtanzeigeanordnung hervor, welche im Wesentlichen aus einem Reflektoreinsatz mit transparenter Abdeckhaube besteht, wobei der Reflektoreinsatz die Abdeckhaube von hinten beleuchtet, um hierauf aufgebrachte Motive anzuzeigen. Der Reflektoreinsatz ist mit speziellen ausbrechenbaren Leuchtzonen und mit nach innen gewölbten Reflektorsegmenten versehen. Hierin sind Aufnahmen für Leuchtmittel und Rastnasen für die Befestigung des Reflektoreinsatzes angeformt. Nachteilhaft bei dieser Leuchtanzeigeanordnung ist, dass aufgrund der hinter der Abdeckhaube angeordneten gewölbten Reflektorsegmente eine recht hohe Bauteildicke entsteht, welche einen entsprechenden Einbauplatz erfordert. So kann diese Leuchtanzeigeanordnung nicht in dünne Wände eingesetzt werden, ohne dass der rückwärtige Teil des Reflektoreinsatzes über die Wandebene hervorsteht.

Die DE 103 11 335 A1 offenbart eine besonders flachbauende Leuchtanzeigeanordnung, die als Kunststoff-Formkörper ausgebildet ist und keinen rückwärtigen Reflektoreinsatz erfordert. Ein Kunststoffgrundkörper und eine dem Kunststoffgrundkörper zumindest teilweise überdeckende Kunststofffolie schließt hierbei eine Elektrolumineszenz-Funktiosschicht und eine farbige, lichtdurchlässige Schicht ein, wobei die lichtdurchlässige Schicht durch in der Elektrolumineszenz-Funktionsschicht erzeugtes Licht durchleuchtbar ist. Auf der dem Kunststoffgrundkörper abgewandten Fläche der Kunststofffolie ist dabei eine farbige, lichtundurchlässige Schicht mit als Motiv ausgebildeter Ausnehmung vorhanden, wodurch eine Verschwindeeffekt des Motivs bei ausgeschalteter Beleuchtung erreicht wird. Dieser Verschwindeeffekt erzeugt einen vollständig geschlossenen Flächeneindruck, wenn diese flachbauende Leuchtanzeigeanordnung nicht eingeschaltet ist. Das anzuzeigende Motiv wird erst dann sichtbar, wenn die Elektrolumineszenz-Funktionsschicht zum Leuchten gebracht wird. Durch den eine Trägerfunktion erfüllenden Kunststoffgrundkörper erscheint diese technische Lösung für besonders flachbauende Anwendungen allerdings immer noch recht dick und die hiermit erzeugbare Anzeigefläche besitzt eine ebene Gestalt und ist zudem unbiegsam. So kann diese Leuchtanzeigeanordnung nicht einer gewölbten Oberfläche folgen.

Der in der DE 197 03 195 A1 offenbarten technischen Lösung haften dieselben Nachteile an, da hier mehrere starre Display-Platten sandwichartig aufeinander geschichtet sind. In jeder Display-Platte ist ein anderes zur Anzeige zu bringendes Motiv eingearbeitet, die durch eine seitlich an den einander geschichteten Display-Platten angebrachten Leuchte aktiviert werden. Hierfür sind die eingebrachten Motive als Streuzentren ausgebildet, die das seitlich in die Display-Platten eindringende Licht durch Streuung zur Anzeigefläche hin austreten lässt. Da die Leuchte aus einzelnen einjeder Display-Platte zugeordneten stabförmigen Lampen besteht, ist dieses Lichtemittiermittel recht aufwendig aufgebaut.

Sowohl US 3 752 974 A als auch WO 2005/001892 A2 offenbaren eine Anordnung gemäß der Präambel des vorliegenden Anspruchs 1.

Es ist die Aufgabe der vorliegenden Erfindung, eine besonders flachbauende Leuchtanzeigeanordnung zu schaffen, die besonders dünn und biegsam ist und mit technisch einfachen Lichtemittiermitteln eine homogene Leuchtanzeige eines Motivs auf einer Anzeigefläche ermöglicht.

### ZUSAMMENFASSUNG DER ERFINDUNG

Die Aufgabe wird ausgehend von einer flachbauenden Leuchtanzeigeanordnung gemäß dem Oberbegriff von Anspruch 1 in Verbindung mit dessen kennzeichnenden Merkmalen gelöst. Die nachfolgenden Ansprüche geben vorteilhafte Weiterbildungen wieder. Hinsichtlich eines speziellen hierbei zum Einsatz kommenden Lichtemittermittels wird auf Anspruch 8 verwiesen.

Die Erfindung schließt die technische Lehre ein, dass bei einer flachbauenden Leuchtanzeigeanordnung die Lichtemittiermittel als eine seitlich an der einen Lichtleiter bildenden transparenten Folie platzierten Lichteinkoppeleinheit ausgebildet ist, wobei das derart über den angrenzenden Kantenbereich in die Folie eingespeiste Licht hierin zusätzlich von einer zumindest einseitig aufgebrachten Spiegelschicht reflektiert werden kann, um sich besonders homogen innerhalb der Folie auszubreiten, wobei zur Erzeugung eines Lichtaustrittsfelds auf der Anzeigefläche ein dem gegenüberliegendes Reflektionsraster zur Herbeiführung einer Lichtauskopplung aufgebracht ist.

Der Vorteil der erfindungsgemäßen Lösung liegt insbesondere darin, dass die Anzeigefläche für das Motiv aus einer Folie gebildet ist, die besonders dünn ausfällt. Versuche haben ergeben, dass sich mit transparenten Folien einer Schichtdicke von ca. 0,5 mm Hinweisschilder in zumindest etwa Postkartengröße herstellen lassen. Durch die Biegsamkeit der Folie lassen sich Anzeigeflächen gestalten, die an gewölbte Konturen von Oberflächen angepasst sind. Die erfindungsgemäße Lichteinkoppeleinheit ermöglicht eine platzsparende seitliche Lichteinspeisung in die dünne Folie. Durch die erfindungsgemäße Lichteinkoppeloptik lässt sich das Licht in die dünne Folie einspeisen, obwohl die Lichtaustrittsfläche der Lichtquelle größer ist als die Foliendicke. Es wird also das Licht der Lichtquelle auf die Foliendicke gebündelt. Zudem wird durch die Lichteinkoppeleinheit das Licht so in die Folie eingekoppelt, dass es in einen optisch günstigen Winkel auf die Folienoberfläche trifft, um eine Lichtleitung zu ermöglichen. Die Lichtleitung und Lichtauskopplung wird mittels Beschichtungstechniken in fertigungstechnisch einfacher Weise auf die Folie aufgebracht. Hierdurch kann eine effiziente Herstellung unterschiedlich großer Anzeigeflächen mit jeder denkbaren Art von Motiven erfolgen, die beispielsweise als Bilder, Piktogramme, Symbole oder Schrift ausgebildet sein können.

Zur Erzielung einer besonders homogenen Lichtausbreitung innerhalb der Folie, welche von der seitlichen Lichteinspeisung ausgeht, wird gemäß einer die Erfindung verbessernden Maßnahme vorgeschlagen, die mindestens einseitige Spiegelschicht durch Direktmetallisieren der Folie aufzubringen. Zum Direktmetallisieren kann beispielsweise Chrom verwendet werden, welcher eine besonders wirkungsvolle Spiegelschicht ergibt. Die Spiegelschicht ist an denjenigen Oberflächenteilen der Folie aufgebracht, welche nicht durch das Reflektionsraster, die einen Lichtaustritt gewährleistende Anzeigefläche sowie das hierauf aufgebrachte Motiv selbst eingenommen sind. Alternativ zum Direktmetallisieren ist es jedoch auch denkbar, die Spiegelschicht durch Bedrucken der Folie mit einer Spiegeleffektfarbe aufzubringen.

Das im Bereich der Anzeigefläche angeordnete Motiv ist mit zumindest teiltransparenter Farbe direkt auf die Folie aufgebracht. Dies kann ebenfalls durch Drucken erfolgen. Alternativ hierzu ist es auch möglich, eine zweite das zumindest teiltransparente Motiv beinhaltende Deckfolie zu verwenden, und diese auf die lichtleitende Folie aufzubringen, beispielsweise aufzulegen. Durch diese Maßnahme lassen sich anzuzeigende Motive auf einfache Weise austauschen.

Gemäß der Erfindung wird vorgeschlagen, dass das Motiv mit einer auf der Anzeigefläche aufgebrachten semitransparenten Farbschicht abgedeckt wird. Diese semitransparente Farbschicht dient dabei der Realisierung eines so genannten Verschwindeeffekts. Der Verschwindeeffekt bewirkt, dass das anzuzeigende Motiv bei nicht eingeschalteter Lichteinkopplereinheit von außen nicht oder nur schwach sichtbar ist. Der Betrachter erblickt eine durchgängig homogene Oberfläche, die meist auch glänzend ist. Wird nun die Lichteinkopplereinheit eingeschalten, so leuchtet das Motiv von der homogenen Oberfläche auf. Die erfindungsgemäß verschieden beschichtete Folie ermöglicht es also, bei seitlicher Lichteinkopplung eine mit dem Verschwindeeffekts ausgestattete Anzeigefläche zu schaffen.

Eine optisch kritische Stelle bei der Lichteinkopplung bildet der Übergang zwischen der Lichteinkoppeleinheit zur Folie. An dieser Stelle ist die Folie vorzugsweise ausgespart, um eine Formanpassung an die Geometrie der Lichteinkopplereinheit zu gewährleisten, welche - je nach gewünschtem optischen Effekt - ganz unterschiedlich ausgebildet sein kann.

Die aus einem transparenten Kunstwerkstoff bestehende Folie sollte gemäß einer anderen, die Erfindung verbessernden Maßnahme mit einem Bandstahlwerkzeug ausgestanzt sein. Alternativ hierzu ist es auch denkbar ein Schneidwerkzeug, bestehend aus Stempel und Matrize einzusetzen. Versuche haben ergeben, dass sich durch diesen Herstellungsschritt derart ebene Schnittkanten erzeugen lassen, welche die Lichtleitung in die Folie hinein nicht behindern.

Gemäß einer anderen Maßnahme wird vorgeschlagen, dass die Lichtemittiermittel als eine seitlich über Klemmstege an die transparente Folie ansteckbare Lichteinkoppeleinheit mit einem transparenten Trägerkörper ausgebildet ist. Dieser Trägerkörper kann dabei aus einem spritzgegossenen Kunststoff bestehen. Die Klemmstege, welche abwechselnd auf die Ober- und Unterseite der Folie klemmend einwirken, gestatten eine einfache und lösbare Verbindung mit der Folie und daher eine besonders leichte Montage bzw. Demontage.

Zum Einkoppeln des Lichts in die Folie besitzt der Trägerkörper der Lichteinkoppeleinheit vorzugsweise mindestens eine sich in Richtung der Flächenerstreckung der Folie, insbesondere im Rahmen eines dort vorzugsweise anzuordnenden Ausschnitts, am Trägerkörper angeformte und hochglanzpolierte optische Fläche. Diese optische Fläche kann beispielsweise über gerade oder bogenförmige Kanten zur Flächenausleuchtung gestaltet sein.

Als Strahlungsquelle dient gemäß einer anderen Maßnahme mindestens eine elektrische Lichtemitterdiode, welche gegenüberliegend der mindestens einen optischen Fläche am Trägerkörper angeordnet ist und Licht in Richtung der optischen Fläche aussendet. Vorzugsweise kann mindestens eine Lichtemitterdiode auf einer Leiterplatte montiert und elektrisch angeschlossen werden, welche wiederum an einem an dem Trägerkörper angeformten Auflagesteg befestigt ist. Die Befestigung kann beispielsweise als Clipverbindung ausgebildet sein.

Weitere, die Erfindung verbessernde Maßnahmen werden nachstehend gemeinsam mit der Beschreibung eines bevorzugten Ausführungsbeispiels anhand der Figuren näher dargestellt. Es zeigt:

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: die Seitenansicht eines Verkehrsflugzeugs mit einer innerhalb der Kabine als Hinweisschild integrierten Leuchtanzeigeanordnung,
- Figur 2: eine Draufsicht auf die Leuchtanzeigeanordnung nach Figur 1,
- Figur 3: eine perspektivische Ansicht der optischen Lichteinkoppeleinheit der Leuchtanzeigeanordnung, und
- Figur 4: eine schematische Schichtdarstellung der die Anzeigefläche bildenden Folie.

### DETAILLIERTE BESCHREIBUNG BEISPIELHAFTER AUSFÜHRUNGSFORMEN

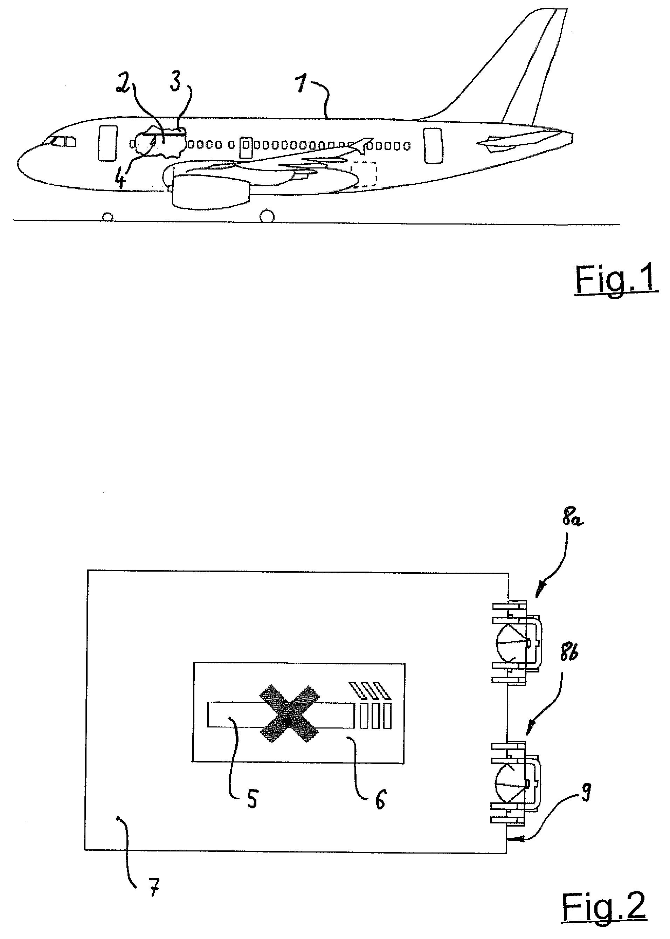

Gemäß Figur 1 weist das Verkehrsflugzeug eine in einem Rumpf 1 integrierte Passagierkabine 2 auf, in welcher eine Kabinenausstattung 3 in Form von Überkopfablagefächern oberhalb der Sitzreihen angeordnet ist, deren unterer sichtbarer Oberflächenbereich mit einer Leuchtanzeigeanordnung in Form eines Hinweisschildes ausgestattet ist. Dieses Hinweisschild kann bei Bedarf, insbesondere zum Starten und Landen, rückwärtig beleuchtet werden, so dass ein einen Hinweis bildendes farbliches Motiv leuchtet.

Gemäß Figur 2 ist ein solches Motiv 5 im vorliegenden Ausführungsbeispiel als Nichtraucherzeichen ausgebildet. Das Motiv 5 befindet sich auf einer Anzeigefläche 6 einer Kunststofffolie 7. Seitlich an der Kunststofffolie 7 sind zwei beabstandet zueinander angeordnete Lichteinkoppeleinheiten 8a, 8b angebracht. Über den angrenzenden Kantenbereich 9 wird hiervon ausgehend Licht in die einen Lichtleiter bildende transparente Folie 7 eingespeist.

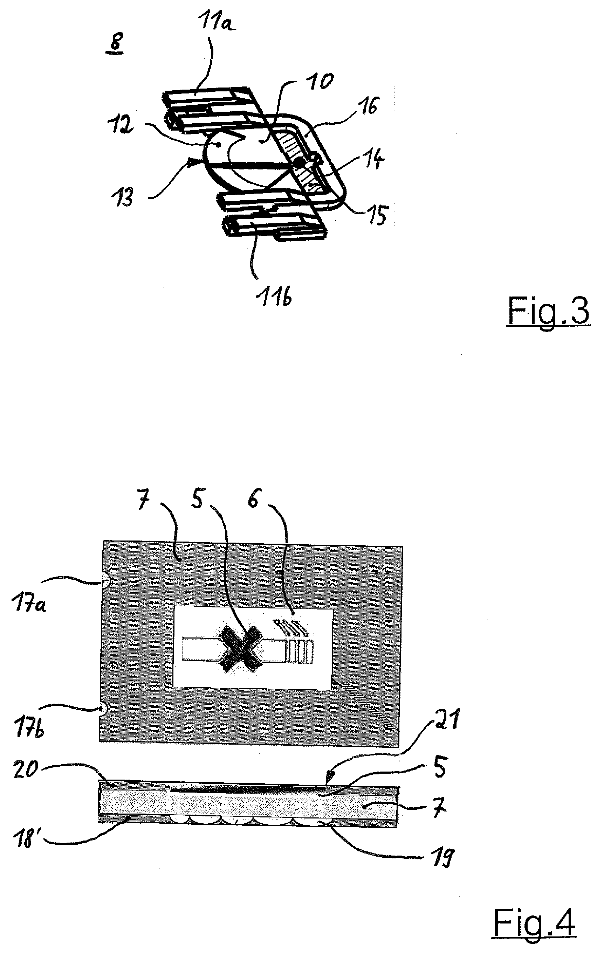

Gemäß Figur 3 besteht die hierfür verwendete Lichteinkoppeleinheit 8 aus einem Trägerkörper 10, welcher aus einem spritzgegossenen transparenten Kunststoff besteht. Am Trägerkörper 10 sind zwei Gruppen von Klemmstegen 11a und 11b angebracht, die ein Anstecken der - hier nicht weiter dargestellten - Folie ermöglichen. Zwischen den beiden Gruppen von Klemmstegen 11a und 11b befindet sich eine hieran angeformte und der Lichtleitung dienende hochglanzpolierte optische Fläche 12. Die optische Fläche 12 ist in Flächenerstreckung der benachbart hieran zur Anlage kommenden Folie ausgerichtet und dient dem möglichst homogenen Einkoppeln des Lichts seitlich in die Folie hinein. Zu diesem Zweck weist die optische Fläche 12 eine vordere Kante 13 auf.

Als Lichtquelle dient der Lichtkoppeleinheit 8 eine oder mehrere elektrische Lichtemitterdioden 14, welche gegenüber der bogenförmigen Kante 13 der optischen Fläche 12 angeordnet sind und das Licht in diese Richtung aussenden. Die Lichtemitterdioden 14 sind auf einer Leiterplatte 15 montiert und hierüber elektrisch angeschlossen. Die Leiterplatte 15 ist über einen am Trägerkörper 10 angeformten Auflagesteg 16 hieran befestigt.

Nach Figur 4 ist auf der Folie 7 eine Anzeigefläche 6 angeordnet, die ein Motiv 5 aufleuchten lässt. Um eine homogene Lichtverteilung des seitlich über die Koppelstellen 17a und 17b über die - hier nicht weiter dargestellten Lichtkoppeleinheiten eingeleiteten Lichts sicherzustellen, ist die Folie 7 außerhalb der Anzeigefläche 6 beidseits mit einer Spiegelschicht 18 versehen, welche das Licht reflektiert und die homogene Verteilung innerhalb der Folie 7 sicherstellt. Zur Erzeugung der Anzeigefläche 6 auf der einen Seite der Folie 7 ist dieser gegenüberliegend ein Reflektionsraster 19 auf die Folie 7 aufgebracht. Das Reflektionsraster 19 stellt ein durch Siebdruck aufgebrachtes eine diffuse Reflektion herbeiführendes Feld dar. Hierdurch wird das sich innerhalb der Folie 7 befindliche Licht reflektiert und an der gegenüberliegenden Seite im Bereich der Anzeigefläche 6 diffus aus der Folie 7 ausgekoppelt. Das teiltransparente Motiv 5 wird bei diesem Ausführungsbeispiel über eine dieses beinhaltende Deckfolie 20 auf die Folie 7 aufgebracht und ist insoweit austauschbar. Zur Realisierung eines Verschwindeeffekts ist das Motiv 5 zumindest im Bereich der Anzeigefläche 6 mit einer semitransparenten Farbschicht 21 beschichtet.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Rumpf
- 2: Passagierkabine
- 3: Kabinenausstattung
- 4: Oberflächenbereich
- 5: Motiv
- 6: Anzeigefläche
- 7: Folie
- 8: Lichteinkoppeleinheit
- 9: Kantenbereich
- 10: Trägerkörper
- 11: Klemmsteg
- 12: Fläche
- 13: Kante
- 14: Lichtemitterdiode
- 15: Halterplatte
- 16: Auflagesteg
- 17: Einkoppelstelle
- 18: Spiegelschicht
- 19: Reflektionsraster
- 20: Deckfolie
- 21: Farbschicht

## Patentansprüche

1. Flachbauende Leuchtanzeigeanordnung mit Lichtemittiermitteln zur Beleuchtung einer Folie (7) für die Anzeige eines auf einer Anzeigefläche (6) aufgebrachten Motivs (5), wobei Lichtemittiermittel als mindestens eine seitlich an der einen Lichtleiter bildenden transparenten Folie (7) angeordnete Lichteinkoppeleinheit (8a;8b) ausgebildet ist, wobei das derart über den angrenzenden Kantenbereich (9) in die Folie (7) eingespeiste Licht hierin reflektiert wird, um sich homogen innerhalb der Folie (7) auszubreiten, wobei zur Erzeugung der Anzeigefläche (6) ein dieser gegenüberliegendes Reflektionsraster (19) zur Herbeiführung einer Lichtauskopplung vorgesehen ist,
**dadurch gekennzeichnet, dass** das Reflektionsraster ein durch Siebdruck aufgebrachtes eine diffuse Reflektion herbeiführendes Feld darstellt, wodurch das sich innerhalb der Folie befindliche Licht reflektiert und an der gegenüberliegenden Seite im Bereich der Anzeigefläche diffus aus der Folie ausgekoppelt wird, wobei das Motiv (5) mit zumindest teiltransparenter Farbe auf die Anzeigefläche (6) der Folie (7) aufgebracht ist, oder wobei eine zweite das zumindest teiltransparente Motiv (5) beinhaltende Deckfolie (20) auf die Folie (7) aufgebracht ist, und das Motiv (5) mit einer auf der Anzeigefläche (6) aufgebrachten semitransparenten Farbschicht (21) zur Realisierung eines Verschwindeeffekts abgedeckt ist.

2. Flachbauende Leuchtanzeigeanordnung nach Anspruch 1,
**dadurch gekennzeichnet, dass** zur Verbesserung der Reflektionseigenschaft zumindest einseitig der Folie (7) eine Spiegelschicht (18) aufgebracht ist.

3. Flachbauende Leuchtanzeigeanordnung nach Anspruch 1,
**dadurch gekennzeichnet, dass** die Spiegelschicht (18) durch Bedrucken der Folie (7) mit einer Spiegeleffektfarbe oder durch Direktmetallisieren der Folie (7) aufgebracht ist.

4. Flachbauende Leuchtanzeigeanordnung nach Anspruch 1,
**dadurch gekennzeichnet, dass** die Folie (7) aus einem transparenten Kunststoffwerkstoff besteht und mit einem Bandstahlwerkzeug ausgestanzt ist, um ebene Schnittkanten zu erhalten.

5. Verkehrsflugzeug mit einem eine Passagierkabine (2) enthaltenden großvolumigen Rumpf (1), deren Kabinenausstattung (3) sichtbare äußere Oberflächenbereiche (4) zu Anzeigezwecken aufweist, die mit einer flachbauenden Leuchtanzeigeanordnung nach einem der Ansprüche 1 bis 4 versehen sind.

## Claims

1. Flat designed luminous display arrangement with light-emitting means for illuminating a foil (7) for the display of a motive (5) applied on a display surface (6), wherein the light-emitting means is formed as at least one lightcoupling unit (8a;8b), arranged sideward to a light duct forming transparent foil (7), wherein the light such reflected over the adjacent edge region (9) is inducted into the foil (7 to spread out homogenously within the foil (7), wherein for generation of the display area (6), a reflection raster is provided arranged opposite to the display to achieve a lightcoupling,
**characterized in that** the reflection raster is a field inducing a diffuse reflecting, which field is applied by screen printing, , whereby the light within the foil is reflected and is coupled out of the foil in a diffuse manner at the opposite side in the area of the display surface , wherein the motive (5) is arranged on the display surface (6) of the foil (7) with at least partly transparent foil, or wherein a second, the at least partly transparent motive (5) including covering film (20) is arranged on the foil (7) and the motive (5) is covered on the display area (6) with a semitransparent colour coat (21) for realizing a disappearing effect.

2. Flat designed luminous display arrangement according to claim 1,
**characterized in that** at least on one side of the foil (7), a mirror layer (18) is applied for improving the reflection property.

3. Flat designed luminous display arrangement according to claim 1, **characterized in that** the mirror layer (18) is applied by printing a mirror-effect colour onto the foil (7) or by direct metallization of the foil (7).

4. Flat designed luminous display arrangement according to claim 1,
**characterized in that** the foil (7) consists of a transparent plastic material and is die cut with a steel-strip tool to obtain flat cutting edges.

5. Aircraft with a large volume fuselage (1) containing a passenger cabin (2), wherein a cabin equipment (3) thereof provides visible external surface areas (4) for displaying purposes, which are provided with a flat designed luminous display arrangement according to one of the claims 1 to 4.

## Revendications

1. Agencement d'affichage lumineux plat comportant des moyens d'émission de lumière destinés à éclairer une feuille (7) pour l'affichage d'un motif (5) appliqué sur une surface d'affichage (6), dans lequel le moyen d'émission de lumière est réalisé en tant qu'au moins une unité de couplage de lumière (8a ; 8b) disposée latéralement sur la feuille (7) transparente formant une fibre optique, dans lequel la lumière alimentée dans la feuille (7) à travers la zone de bord (9) adjacente est réfléchie dedans de manière à se propager de manière homogène à l'intérieur de la feuille (7), dans lequel, pour générer la surface d'affichage (6), une grille de réflexion (19) opposée à celle-ci est ménagée pour entraîner un découplage de lumière,
**caractérisé en ce que** la grille de réflexion représente un champ appliqué par sérigraphie, entraînant une réflexion diffuse, au moyen du quoi la lumière se trouvant à l'intérieur de la feuille est réfléchie et découplée de la feuille de manière diffuse sur le côté opposé, dans la partie de la surface d'affichage, dans lequel le motif (5) est appliqué sur la surface d'affichage (6) de la feuille (7) à l'aide d'une peinture au moins partiellement transparente, ou dans lequel une deuxième feuille de recouvrement (20) contenant le motif (5) au moins partiellement transparent est appliquée sur la feuille (7), et dans lequel le motif (5) est recouvert par une couche de peinture (21) semi-transparente appliquée sur la surface d'affichage (6) pour la réalisation d'un effet disparaissant.

2. Agencement d'affichage lumineux plat selon la revendication 1,
**caractérisé en ce qu'**une couche à effet de miroir (18) est appliquée au moins sur un côté de la feuille (7) pour améliorer la caractéristique de réflexion.

3. Agencement d'affichage lumineux plat selon la revendication 1,
**caractérisé en ce que** la couche à effet de miroir (18) est appliquée par impression de la feuille (7) à l'aide d'une peinture à effet de miroir ou par métallisation directe de la feuille (7).

4. Agencement d'affichage lumineux plat selon la revendication 1,
**caractérisé en ce que** la feuille (7) est constituée d'une matière plastique transparente et est découpée à l'aide d'un outil pour acier en bandes afin d'obtenir des arêtes de coupe planes.

5. Avion de ligne comportant un fuselage (1) de gros volume contenant une cabine de passagers (2), dont l'équipement de cabine (3) présente des zones de surfaces (4) extérieures visibles à des fins d'affichage, lesquelles sont munies d'un agencement d'affichage lumineux plat selon l'une quelconque des revendications 1 à 4.
